# EUROPEAN PATENT APPLICATION

(11) **EP 1 293 726 A2**
(43) Date of publication of application: **19.03.2003**
(21) Application number: 02020769.2
(22) Date of filing: 16.09.2002
(51) Int. Cl.: F23M 11/04, A47F 3/04, B32B 17/10, C03C 27/00, E06B 3/66

(54) **Heat barrier window utilising a combination of coatings**

(30) Priority: 14.09.2001 US 322320 P
(71) Applicant: Pleotint, L.L.C., West Olive, MI 49460 (US)
(72) Inventor: Millett, Frederick A., Grand Haven Michigan 49417 (US); Byker, Harlan J., Michigan 49423 (US)
(74) Representative: Howden, Christopher Andrew

(57) **Abstract**

Heat barrier windows comprising glass substrates coated with a combinations of heat barrier coatings is described. The heat barrier windows may be produced quickly and inexpensively 10 produce desirable infrared reflective and emissive properties in the finished heat barrier window heretofore unavailable.

## Description

### CROSS REFERENCE TO RELATED APPLICATIONS

This application claims priority from U.S. Provisional Application, Serial No. 60/322,320 filed September 14, 2001.

### FIELD OF THE INVENTION

The invention is related to glass which may be used for windows and various specialty applications, and more particularly to heat barrier windows which have coatings thereon for controlling the amount of radiation that is transmitted through the windows.

### BACKGROUND OF THE INVENTION

There are many applications, which call for the use of glass, which has properties that resist or present a barrier to heat and/or various wavelengths of radiation. In particular, it has been found that glass having such properties is sometimes desirable for use as windows for fireplaces, furnaces, ovens, buildings, environmental chambers, freezers and refrigerators, as well as in other applications. In furnace, fireplace, and oven applications, the use of heat barrier windows allows the ability to provide a window or viewing area which effectively keeps heat on the inside of a plenum thus reducing the energy requirements to maintain an elevated temperature inside the plenum and increasing safety due to lower temperatures on the outer most window pane of the heat barrier window assembly even when high temperatures exist inside of the plenum. In building window applications, the use of heat barrier windows can increase the efficiency of the window and help to lower heating and/or cooling costs. In freezer and refrigerator applications, the use of heat barrier glass decreases the heat energy entering a cooled plenum and may eliminate the need for heated glass to minimize exterior condensation.

Not only has it been found desirable to have windows which have heat barrier properties for use in these types of applications, it has also been found that in many instances such applications, by their very nature, call for the use of tempered glass. This is because standard, non-tempered glass has been found to be generally unsatisfactory because it breaks too easily and/or because it can not withstand the extreme temperature conditions in which heat barrier glass may be used. Tempered glass is useful for these applications in that it has four times the strength of ordinary glass, can handle in excess of a 90°C temperature difference between the middle and edge of the glass and can withstand many heating and cooling cycles. This extra strength is often needed for safety reasons due the windows location or due to the temperature gradients across the heat barrier window area and the thermal cycling that is experienced in some of the above-identified applications.

In order to satisfy the need for a tempered heat barrier window glass, prior art window glass has been made by applying known heat barrier coatings with low infrared emissivity, (low-e), and high infrared reflectance to glass using either pytolytic coating procedures or by using physical vapor deposition, (PVD), coating procedures. These coating are generally placed on the glass before or during the tempering process.

When better heat barrier characteristics are desired, a single piece of glass can be coated on both sides, (both major surfaces), with coatings with high infrared reflectance and low infrared emissivity. These double-sided coatings often have been provided by a pyrolytic process known as spray pyrolysis which can also be called chemical liquid deposition. In this case both sides of a hot piece of glass are coated by spraying the glass with a solution of metal oxide precursors in the presence of oxygen. The uniformity of coating obtained by spray pyrolysis is often poor so that the glass has a wide variation is color appearance. The heat barrier properties are not uniform, the infrared reflectance is not particularly high and the infrared emissivity is not particularly low.

Alternatively, heat barrier glass with double sided coatings might be provided by a process described in US Patent 6,024,084 to Gerhardinger (the contents of which and the references cited therein being herein fully incorporated by reference). This disclosure describes coating glass that has already been coated by a pyrolytic process known as chemical vapor deposition, (CVD), on the side opposite of the first coating in a separate CVD process. This process is relatively expensive to set up and makes it difficult to obtain heat barrier properties comparable to those achieved with the present invention.

It would be desirable to have window with better heat barrier properties that are uniform in color appearance and have good durability. Additionally, it would be desirable to have such windows which could be made cheaply and easily.

### SUMMARY OF THE INVENTION

The present invention provides heat barrier windows which are relatively inexpensive to make with high volume commercial processes. The invention also provides windows which exhibit excellent heat barrier properties compared to prior art heat barrier windows and are uniform in color appearance. The heat barrier windows of the present invention have particular advantages when tempering of the heat barrier glass is desired or required. The heat barrier windows of the present invention achieve improvement over past heat barrier windows by using a combination of coatings of the type prepared by pyrolytic processes and coatings of the type prepared by physical vapor deposition processes (PVD). The present invention provides heat barrier glass with coatings on both sides of the glass that can readily be tempered, which can readily be produced with little or no color appearance, and which have high infrared reflectance properties and low infrared emissivity properties. The present invention allows the use of readily available glass; glass coating processes and equipment and existing large volume tempering processes and equipment. Heat barrier windows of the present invention can use a single piece of coated glass or multiple pieces of coated glass in various combinations. The combinations and locations of each coating and piece of glass being chosen to achieve the desired heat barrier and product durability/stability characteristics.

The heat barrier windows of the present invention preferably achieve the above-identified improved heat barrier qualities by utilizing pyrolytic process produced coatings on one side of a piece of glass and PVD process produced coatings on the other side of a piece of glass. The double coated glass may be used by itself or in combination with other coated or uncoated glass substrates as desired to produce a multi-pane windows having the desired heat barrier characteristics. In this regard, it is particularly advantageous to use a heat barrier coating of the type prepared by a PVD process which will survive the tempering process from the standpoint of maintaining its high infrared reflectivity and its low infrared emissivity..

### BRIEF DESCRIPTION OF THE DRAWINGS

Fig. 1 is a schematic diagram of an arrangement of triple-paned glass in accordance with an embodiment of the invention showing each pane of glass having 2 opposed major surfaces; and
Fig. 2 is a plot of surface temperature versus time wherein each of the curves represents a trial conducted as detailed below.

### DETAILED DESCRIPTION OF THE EMBODIMENTS

As discussed above, the present invention provides heat barrier glass with coatings on both sides that can readily be tempered, which can readily be produced with little or no color appearance and which has high infrared reflectance and low infrared emissivity, The present invention allows the use of readily available glass, glass coating processes and equipment and existing large volume tempering processes and equipment. This heat barrier glass is preferably produced by placing a cost effective coaling of the type prepared by a pyrolytic process on one side of the glass and coating the other side of the glass with a coating of the type prepared by a PVD process which is capable of surviving processes such as tempering and heat strengthening.

Heat barrier windows act as barriers to heat by a number of mechanisms. The glass substrates themselves prevent the flow of gasses and minimize thermal convection. However, much heat can undesirably still be lost or gained by radiation, particularly infrared radiation. Heat barrier coatings on glass can act as a barrier to radiant energy transfer by two mechanisms. One mechanism involves the coatings being able to reflect infrared radiation and the other mechanism involves the coatings being poor radiators or emitters of infrared radiation. Glass coated on both sides allows one piece of glass to act as a radiant heat barrier by both mechanisms, i.e, via reflection of infrared radiation and via a low rate of emission of infrared radiation.

The coatings of particular interest are at least somewhat transparent to visible light, are good reflectors of infrared radiation and at the same time are poor radiators of infrared radiation. In general these coatings are single or multiple layers of metals and/or metal oxides. Many of the heat barrier coatings of the type of particular interest are also known as low-e coatings and are described in the art of low-e coatings. Multiple layers are often used to anti-reflect or color suppress single layer coatings that otherwise might have high visible light reflectivity or exhibit a particular color or rainbow of colors due to interference effects and possible non-uniformity of layer thickness.

Heat barrier coatings on glass are generally provided by either pyrolytic or PVD processes. Pyrolytic processes for coating glass, by definition, primarily involve heat induced reactions normally at temperatures in excess of 250 degrees Celsius and often as high as about 500-700 degrees Celsius. The reactants can be supplied as gases, liquids, solids or combinations thereof. When gases are used, the process is usually referred to as chemical vapor deposition, (CVD). When liquids are used, the liquids are often solutions and the process is usually referred to as spray pyrolysis. When solids are used, the solids are often powders and the process is usually referred to as chemical powder deposition, (CPD). When low-e coatings are provided by a pyrolytic process, they are often referred to as hard coat, low-e coatings, especially those that gain their low-e properties from a layer of fluorine doped tin oxide. The better pyrolytic low-e coatings have emissivities of 0.1 to 0.25 and sheet resistances of 10 to 40 ohms per square.

Several glass manufacturers, such as Pilkington, PPG and AFG, provide glass with a hard coat, low-e coating that is produced via a pyrolytic process that involves chemical vapor deposition. The most cost effective manufacturing method involves applying the coating materials to the glass while the glass is being formed into a sheet during the floatline flat glass production process. This glass is generally provided with a multi-layer color suppressed coating with the low-e properties being provided by a layer of fluorine doped tin oxide. While cost effective to produce, this coating process cannot directly provide glass coated on both sides, since the glass sheet is just being formed. If the other side of this glass is to be coated by a pyrolytic process, the glass must be reheated in a separate off-line process which is not nearly as cost effective, especially if a multi-layer color suppressed coating is desired.

Because of cost and heat barrier performance, the color suppressed, multi-layer coatings of the type prepared by a pyrolytic process on the glass producing floatline are still preferred as a starting point for double-side coated heat barrier glass. However, when the glass is made on the floatline the hot glass is floated on molten tin which leaves behind a residue on the glass surface. This makes the so-called "tin side" of the glass undesirable to coat by other processes. In the present invention, we have discovered that, even when coating the tin side of the glass by a PVD process, a high performance coating with uniform appearance can be obtained.

Prior art glass with coatings on both sides is often prepared by spray pyrolysis by heating the glass and spraying both sides with a solution of metal oxide precursors that react with the oxygen in air by the pyrolytic process to form an electronically conducting metal oxide layer, such as a doped tin oxide layer. However the coatings prepared by spray pyrolysis often have significant variation in color appearance across the coating. This is believed to be due to non-uniform coating thickness and colored reflections due to optical interference which are coating thickness dependent. This problem can become even worse when thick layers with lower infrared emissivity and higher infrared reflectivity are desired.

There are a wide variety of methods for producing coatings by PVD processes including thermal evaporation, electron beam evaporation, and a variety of methods of sputtering, including linear magnetron sputtering and reactive sputtering. Although heat induced reactions can take place in sputtering the primary means of producing material for deposition involves physically removing material from a target by bombardment of the target with particles. Most PVD processes take place in high vacuum at room temperature or moderately elevated temperatures, up to about 300 degrees Celsius. High temperatures, when used, are primarily to promote good grain growth in the deposited films, Low-e coatings produced by PVD processes often involve thin metal layers like thin layers of silver metal sandwiched between thin layers of metal oxides and/or nitrides like zinc oxide or silicon nitride or a variety of other oxides and nitrides. Often 3 or 5 or even more layers of alternating metal oxide and metal are used to achieve low visible light reflection, little or no color appearance and emissivities as low as 0.03 to 0.04. The sheet resistances of these coatings are typically in the range of 3 to 15 ohms per square.

Silver based heat barrier coatings, (often called soft coat, low-e coatings), are generally better heat barrier coatings because they have higher infrared reflectance and lower infrared emissivity than heat barrier coatings based on doped tin oxide produced by pyrolytic processes. However silver based, soft coat, low-e coatings have not generally been considered for use in double-side coated heat barrier glass because these coatings are physically soft and more difficult to handle in a tempering process and until recently, lacked the high temperature durability to survive the tempering process. Also, coatings produced by PVD have not been considered durable enough for long term use in high temperature applications, especially those that involve a lot of cycling between low and high temperatures.

However recent developments have produced soft coat, low-e coatings which can be applied by PVD techniques that has proven to be thermally stable enough to stand up to relatively high temperatures thereby allowing experimentation and the discovery of inexpensive heat barrier windows with performance characteristics previously thought unattainable. In addition, proper placement of the coatings applied by PVD in multi-pane heat barrier window structures has resulted in excellent durability for these coatings.

In this regard, it is noted that despite the fact chat some of the newer soft coat, low-e coatings, such as the kind discussed in U.S. Pat. No. 6,231,999 to Krisko (the contents of which and the references cited therein being herein fully incorporated by reference), are able to withstand high temperature conditions in an oxidizing environment, these coatings are still susceptible to damage if physically contacted during these high temperature conditions. Accordingly, a process must be provided for coating glass substrates with these coatings which does not require that the soft coat surface be in contact with handling equipment, such as rollers, during a second coating process or a tempering or heat strengthening process.

Other types of heat barrier coatings that can be produced by PVD processes are metal oxides like tin doped indium oxide, (ITO), Although, it is also possible to produce layers of ITO by pyrolytic processes, those prepared by PVD are preferred for the present invention. If the ITO is applied to the glass before the tempering process it is preferred that the ITO have one of the characteristics described in US Patents 4,490,227; 4,650,556 and 4,655,811 to Bitter (the contents of which and the references cited therein being herein fully incorporated by reference), as the conditions for bending glass coated with ITO are similar to those for tempering.

Exceptional barrier properties are possible with a combination of ITO and silver coatings. A coating that comprises a layer of ITO, a layer of silver and a layer of ITO is often described as an IMI coating.

With regard to tempering, glass with heat barrier coatings of the type prepared by most any pyrolytic process has the advantage that it can be tempered in a conventional tempering furnace with relatively minor adjustments in the tempering conditions when compared to the conditions used to temper uncoated glass. However a particularly advantageous tempering process for the heat barrier glass of the invention comprises the use of convection type oven for heating the glass since the high infrared reflectance coatings on the glass makes the use of radiant heat type ovens somewhat less effective. In addition, the coated glass produced by a pyrolytic process can be tempered with the glass substrate in a horizontal orientation with the heat barrier coating facing down, i.e. with the coating in contact with or against the rollers that move the glass through the tempering furnace. This allows for tempering with coatings on both sides of a single piece of glass even if the coating on the side facing up is not as physically durable.

A preferable means of production of the heal barrier glass of the invention involves cutting to shape and edging pieces of glass with multi-layer coating of the type applied on the floatline, followed by coating the uncoated side with a coating of the type prepared by a PVD process, followed by tempering. Another preferable means of production involves a large area pieces of glass with a multi-layer coating of the type applied on the floatline which is coated on its uncoated side with a coating of the type prepared by a PVD process. This is followed by cutting to shape, edging and tempering pieces of the double-side coated glass. Still another preferable method of production of the heat barrier glass of the invention involves cutting to size and edging the pieces of glass that have color suppressed coating of the type provided by pyrolytic processes, followed by tempering, followed by coating the uncoated side of the tempered pieces of glass with coatings of the type prepared by PVD processes.

The heat barrier glass of the invention is particularly useful in environmental chamber windows, refrigerator windows, freezer windows, building windows, fireplace windows, oven windows and furnace windows. The heat barrier glass of the invention can provide energy savings by helping to retain heat where it is wanted and by helping to reject heat from entering where it is not wanted.

Most fireplaces presently do not use heat barrier glass but instead use uncoated, tempered glass as a radiant heater. However the glass reaches temperatures that are too hot to touch without causing injury to the person touching the glass. One or more pieces of the heat barrier glass or a multi-pane window involving at least one of the pieces of glass of the invention could provide a safer window for a fireplace viewing area.

An oven produces radiant heat energy that warms the oven and the food or other items placed therein. Heat energy tries to move from high temperature to low temperature regions. Heat barrier glass with coating that provide high infrared reflectance and low infrared emission impede this movement and thus help retain the heat energy where it is doing useful work. In self-cleaning ovens, for home use, the temperatures, inside the oven, can rise to above 480 degrees Celsius during the self cleaning cycle. With room ambient temperatures of 20-30 degrees Celsius, the temperature difference is high and heat loss through an oven window without heat barrier coatings or with less effective heat barrier coatings can be substantial. Thus the highly effective heat barrier coating of the present invention can reduce the energy input required to reach and maintain a given temperature.

A major concern with heat barrier windows is the color neutral appearance of the coated glass used in the windows. The existing glass often used in an oven is double coated with tin oxide by spray pyrolysis. This glass is not color suppressed so the coated glass has a rainbow of colors associated with it and it does not have a neutral looking appearance, Presently, many oven manufacturers use an obscuring design on the outside glass to hide the effect of the rainbow looking glass. This obscuring does reduce the perception of the rainbow colored glass but also detracts from the view through an oven window, Coated glass of the present invention readily allows for a color neutral appearance since both coating processes readily provide for color suppression. This eliminates a major motivation for use of obscuring patterns on the decorative piece of glass.

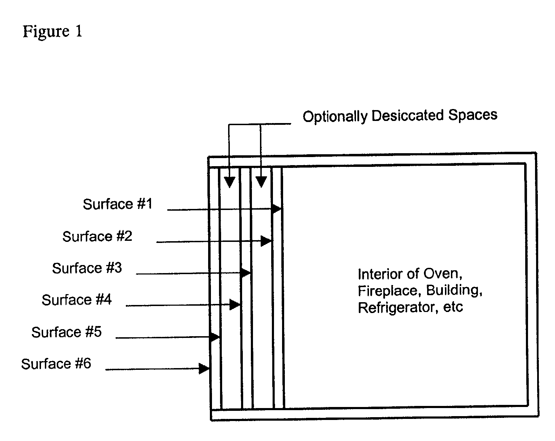

Windows in refrigerators and freezers, especially those used in commercial refrigeration like that in grocery stores use substantial amount of energy to keep food items cold. Heat penetration through display windows is a major issue for the energy consumption of the cooling unit. Better heat barrier windows can again provide energy savings. An unexpected benefit of better heat barrier windows is the possible elimination of the need for heating of the exterior glass pane to prevent condensation. This is because the heat barrier properties of a configuration like that shown in Figure 1 with the center pane being one of the pieces of heat barrier glass of this invention could be so good that the exterior pane would not be cold enough to promote condensation of moisture.

Heat barrier windows of the invention can use a single piece of coated glass or preferably multiple pieces of glass in various combinations some of which combinations are described below.

Even the most durable coatings produced by PVD like temperable soft coat, low-e coatings are more susceptible to degradation from heat, oxidation, oven fumes, atmospheric contaminants and moisture than the pyrolytic coatings. Thus there is an advantage to the placement of the soft coat, low-e, (which is a heat barrier coating of the type prepared by PVD processes), on surface #3 and/or surface #2 of a window structure as shown in Figure 1. The space between surface #2 and surface #3 can be at least partially sealed against contaminants like oven and fire place fumes. In this configuration a silver based, heat barrier coating has been found to retain its heat barrier properties even after nine self cleaning cycles in a conventional cooking oven.

Referring to Figure 1, a preferred configuration from a performance, durability and cost standpoint for a heat barrier oven window or fireplace window pack is:
1) A piece of glass coated on only one side with a color suppressed coating of the type prepared by a pyrolytic process is used as the inside piece of glass in contact with the oven cavity. This piece of glass is oriented so the coated side faces the oven cavity, i.e. coating on surface #1.
2) A piece of glass of the present invention is used as the middle piece of glass. This piece of glass is preferably oriented so the side coated with the coating prepared by a PVD process is facing the oven cavity, i.e. coating on surface #3. This allows the frame that holds the interior two pieces of glass to help prevent undesirable substances like humidity or fumes from the oven or fireplace from reaching the coating on surface #3.
3) An optional outside piece of glass may be used as a decorative piece of glass with or without heat barrier coatings.

For windows in a building, in particular for windows in the doors of buildings, with reference to Figure 1 an advantageous configuration would be:
1) A removal piece of tempered glass without coatings on the interior side of the building
2) A piece of glass with a hard coat type low-e coating on surface #3 and a soft coat type low-e coating on surface #4.
3.) A piece of glass on the outside which is optionally sealed to the center piece of glass to form a double pane insulated glass unit, optionally filled with an inert gas like argon.

Another aspect of this multi-pane construction is the possibility of a desiccated air space especially where the soft coat low-e is present. The desiccated air space will reduce moisture impact on the soft coat low-e. A feature of using these windows In a fireplace or an oven is that normal use will dry the desiccant and thus replenish the desiccant's moisture absorbing ability.

In an oven or fireplace application, the window configuration shown in Figure 1 results in reduced temperatures on surface #6 of the window structure. This means that there is reduced possibility of burns associated with a person touching the surface while the product is being used. At the same time a relatively colorless or neutral appearance can readily be achieved with this combination of coatings. Also the coated glass is readily tempered or heat strengthened with conventional and modern tempering or heat strengthening equipment especially with the use of convection type furnaces for heating the glass to be tempered or heat strengthened.

The invention allows the possibility of reducing the number of glass pieces used in an oven or furnace window while still providing an excellent barrier to radiant heat and heat loss due to infrared radiation processes. Alternatively the number of coated surfaces required may be reduced in a window which still achieves excellent heat barrier properties.

The reduced temperatures on the outside window pane realized with the heat barriers of the present invention more readily allow the use of thermoscattering material in oven door window application as described in US Patent 6,262,303 to Byker et. al., which is herein incorporated by reference. With reference to Figure 1, a thermoscattering layer may preferably provided on surface #5. The thermoscattering layer optionally may be provided between the exterior piece of glass and a fourth piece of glass that is laminated to the exterior piece of glass on surface #5. In use, the thermoscattering layer goes from obscure or frosted, when cool, to clear when heated thus producing an interesting decorative effect while not affecting the utility of the window. If desired for decorative or utilitarian reasons, the thermoscattering layer may be electrically heated.

### Examples

Coating Types Used in Examples:
SCLE (Soft Coat Low Emissivity) = PPG Sungate® 1 00 which comprises a silver layer
HCLE1 (Hard Coat Low Emissivity 1) = PPG Sungate® 500 which comprises a doped tin oxide layer over a coating with a graded index of refraction to help index match the low index of refraction glass to the high index of refraction tin oxide
HCLE2 (Hard Coat Low Emissivity 2) = Pilkington TEC™ 15 which comprises a doped tin oxide layer over a 2 layer stack of tin oxide and silica which provide some color suppression to the overall 3 layer stack of coatings on the glass
SP (Spray Pyrolysis) = spray pyrolysis coating which comprises doped tin oxide with non-uniform color or rainbow effect. This coating was found on both sides of a sheet of heat barrier glass taken from a GE Spectra Oven model # JBP35B4WH, labeled with the HBII®, a reg istered trademark of Marsco Manufacturing, LLC.,

In the examples below a GE Spectra Oven model # JBP35B4WH was used. During temperature cycle the temperatures were measured once each minute with a Pico Technology Model TC-08 datalogger using Type K thermocouples.

### Example 1

Temperatures as a function of time were measured for 3 self cleaning cycles with heat barrier glass in the oven in the as received configuration. With reference to figure 1 this configuration was as follows:
Surface #1 - HCLE2
Surface #2 - uncoated
Surface #3 - SP
Surface #4 - SP

The ambient temperature, maximum temperature in the oven cavity and the maximum temperature on Surface #6 for each run were as follows:

| Temperature Location | Run 1 | Run 2 | Run 3 | Average |
|---|---|---|---|---|
| Ambient | 30.97 | 31.97 | 31.84 | 31.59 |
| Oven Cavity | 475.66 | 474.88 | 475.18 | 475.24 |
| Surface #6 | 83.80 | 85.12 | 84.68 | 84.53 |

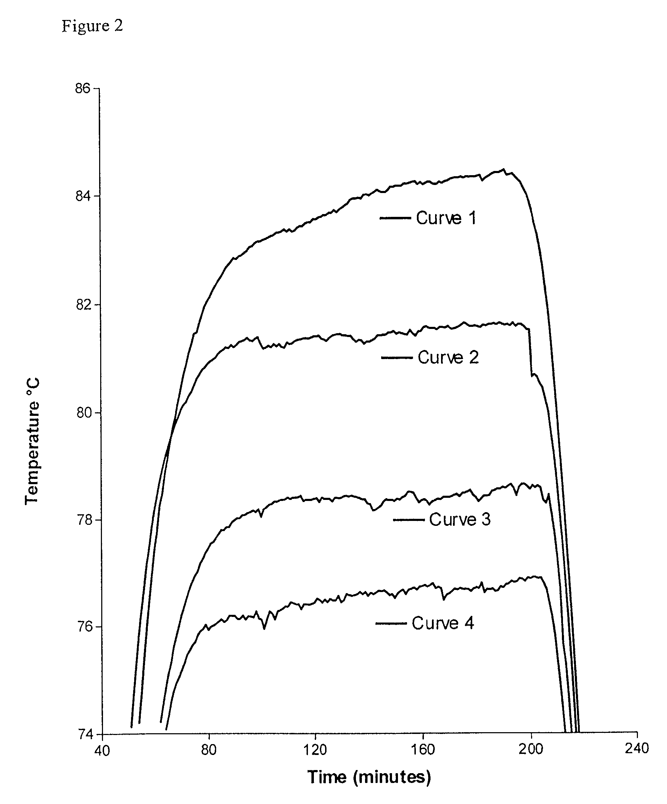

An average of the temperature versus time for the 3 self cleaning cycles is shown as curve 1 in Figure 2.

### Example 2

Temperature as a function of time was measured for 6 self cleaning cycles. With reference to figure 1 the heat barrier glass in the oven was in the configuration as follows:
Surface #1 - uncoated
Surface #2 - HCLE2
Surface #3 - SCLE
Surface #4 - HCLE1

The ambient temperature, maximum temperature in the oven cavity and the maximum temperature on Surface #6 in degrees Celsius for each run were as follows:

| Temperature Location | Run 1 | Run 2 | Run 3 | Run 4 | Run 5 | Run6 | Average |
|---|---|---|---|---|---|---|---|
| Ambient | - | 32.17 | 31.60 | 31.75 | 31.04 | 33.20 | 31.95 |
| Oven Cavity | 476.86 | 476.02 | 477.28 | 475.61 | 470.94 | 473.77 | 475.08 |
| Surface#6 | 84.50 | 82.07 | 81.07 | 81.92 | 79.93 | 81.64 | 81.86 |

An average of the temperature versus time for the 6 self cleaning cycles is shown as curve 2 in Figure 2.

### Example 3

Temperature as a function of time was measured for 3 self cleaning cycles. With reference 10 figure 1 the heat barrier glass in oven was in the configuration as follows:
Surface #1 - HCLE2
Surface #2 - uncoated
Surface #3 - SCLE
Surface #4 - HCLE1

The ambient temperature, maximum temperature in the oven cavity and the maximum temperature on Surface #6 for each run were as follows:

| Temperature Location | Run 1 | Run 2 | Run 3 | Average |
|---|---|---|---|---|
| Ambient | 31.28 | 30.31 | 29.93 | 30.51 |
| Oven Cavity | 476.04 | 475.55 | 476.51 | 476.03 |
| Surface #6 | 80.08 | 78.55 | 77.86 | 78.83 |

An average of the temperature versus time for the 3 self cleaning cycles is shown as curve 3 in Figure 2.

### Example 4

Temperature as a function of time was measured for 3 self cleaning cycles. With reference to figure 1 the heat barrier glass in oven was in the configuration as follows:
Surface #1- HCLE1
Surface #2- SCLE
Surface #3 - SOLE
Surfaced #4 - HCLE1

The ambient temperature, maximum temperature in the oven cavity and the maximum temperature on Surface #6 for each run were as follows:

| Temperature Location | Run 1 | Run 2 | Run 3 | Average |
|---|---|---|---|---|
| Ambient | 31.82 | 31.10 | 29.95 | 30.96 |
| Oven Cavity | 475.01 | 476.60 | 475.93 | 475.85 |
| Surface #6 | 77.27 | 77.13 | 76.50 | 76.97 |

An average of the temperature versus time for the 3 self cleaning cycles is shown as curve 4 in Figure 2.

### Example 5

The visible light transmission spectra of a sheet of glass with the SP coating on both sides of the sheet was measured near each corner of the sheet using a Shimadzu model # UV3101PC spectrophotometer. The spectra were used to calculate the CIELAB 1976 color coordinates for Illuminate C for the transmitted light using the software provided with the spectrometer. The results were as follows:

| L* | a* | b* | C*_{ab} | Y |
|---|---|---|---|---|
| 86.6 | 3.8 | 6.34 | 7.39 | 69.19 |
| 91.71 | -5.85 | 11.73 | 13.11 | 80.05 |
| 88.87 | -6.50 | 10.86 | 12.66 | 73.88 |
| 85.39 | 4.79 | 4.21 | 6.38 | 66.77 |

The visible light transmission spectra of a sheet of glass with HCLE1 coating on one side and SCLE coating on the other side of the sheet was measured near each corner of the sheet using a Shimadzu model # UV3101PC spectrophotometer. The spectra were used to calculate the CIELAB 1976 color coordinates for Illuminate C for the transmitted light using the software provided with the spectrometer. The results were as follows:

| L* | a* | b* | C*_{ab} | Y |
|---|---|---|---|---|
| 89.77 | -3.54 | 6.58 | 7.47 | 75.80 |
| 87.00 | -3.26 | 7.09 | 7.80 | 70.10 |
| 89.79 | -3.62 | 6.15 | 7.14 | 75.86 |
| 89.84 | -3.62 | 6.52 | 7.46 | 75.97 |

The use of color coordinates is described in detail in "Princlples of Color Technology" 2^{nd} Edition, authored by F. W. Billmeyer and M. Saltzman, published by John Wiley and Sons (1981). C*_{ab} is a measure of the Chroma of the object being measured and the lower the value of C*_{ab} the more neutral the color and the more consistent the values of C*_{ab} across an object the more uniform it appears.

The results above show that the sheet of glass with SP coating on both sides has more variation in color and visible light transmission as compared 10 the sheet of glass with HCLE1 coating on one side and SCLE coating on the other side. This is confirmed by visual observation in which the sheet of glass with SP coating on both sides had regions that appeared green, other regions that appeared purple and still other regions that appeared to have a variety of other colors. In contrast, the sheet of glass with HCLE1 coating on one side and SCLE coating on the other side appears uniform in color and nearly neucral in color for transmitted and reflected light. While the color coordinate data are for transmuted light and the appearance of color is largely due to reflected light, these are related and thus the measurements provide a good indication of the uniformity of color or lack thereof.

### Example 6

In general the sheet resistance of a transparent conductive coating is an indicator of the emittance of the coating. Thus the lower the sheet resistance the lower the emissivity, The sheet resistance was measured with a four point probe in the center of the four quadrants of a piece of heat barrier glass removed from a GE Spectra Oven model # JBP35B4WH. This glass was coated on both sides by spray pyrolysis and the sheet resistance was measured on both sides. In addition, a piece of glass with HCLE1 on one side and SCLE on the other side was also measured. The results are presented in the table below where the sheet resistance values are given in ohms per square.

| Coating | Quadrant 1 | Quadrant 2 | Quadrant 3 | Quadrant 4 |
|---|---|---|---|---|
| SP Side 1 | 27.1 | 20.3 | 48.4 | 20.2 |
| SP Side 2 | 22.8 | 30.9 | 18.3 | 32.0 |
| HCLE1 | 19.9 | 20.2 | 20.2 | 20.0 |
| SCLE | 7.8 | 7.7 | 8.2 | 7.9 |

As shown in the table above, the coated glass of the invention, has more uniform sheet resistance across each coated surface and lower sheet resistances in general as compared to the prior art type of double coated heat barrier glass.

Accordingly, the spirit and scope of the invention are to be limited only by the terms of the appended claims.

## Claims

1. A heat barrier glass comprising:
a glass substrate having a first major surface and a second major surface, each of said surfaces comprising an opposed side of said substrate;
a first heat barrier coating applied to said first surface by a pyrolytic process, said first coating being at least partially transparent to visible light; and
a second heat barrier coating applied to said second surface by a physical vapor deposition process, said second coating being at least partially transparent to visible light.

2. The heat barrier glass of claim 1 wherein said glass substrate is tempered or heat strengthened.

3. The heat barrier glass of claim 2 wherein said tempering or heat strengthening is done with said substrate oriented horizontal and said first heat barrier coating facing down with respect to the gravitational field of the earth during said tempering or heat strengthening process.

4. The heat barrier glass of any one of claims 1, 2, or 3 wherein said second heat barrier coating is a coating which retains a significant amount of Its heat barrier properties during exposure to a tempering or heat strengthening process.

5. The heat barrier glass of claim 1 used in a heat barrier window wherein said glass substrate is a second glass substrate and further comprising a first glass substrate having first and second major surfaces comprising opposed sides of said substrate, and wherein said first and second substrates are positioned apart from each other in a spaced relationship, and wherein said first substrate is positioned adjacent to a heat emanating plenum; and
said first major surface of said first substrace faces toward said plenum;
said second major surface of said first substrate faces away from said plenum;
said second major surface of said second substrate faces toward said second major surface of said first substrate; and
said first major surface of said second substrate faces away from said second major surface of said second substrate; and
at least one of said first or second major surfaces of said first substrate has a heat barrier coating applied by a pyrolytic process thereon.

6. The heat barrier glass of claim 1 used in a heat barrier window wherein said glass substrate is a second glass substrate and further comprising a first glass substrate having first and second major surfaces comprising opposed sides of said substrate, and wherein said first and second substrates are positioned apart from each other in a spaced relationship, and wherein said first substrate is positioned adjacent to a heat emanating plenum; and
said first major surface of said first substrate faces toward said plenum;
said second major surface of said first substrate faces away from said plenum;
said first major surface of said second substrate faces toward said second major surface of said first substrate; and
said second major surface of said second substrate faces away from said first major surface of said second substrate; and
at least one of said first or second major surfaces of said first substrate has a heat barrier coating applied by a pyrolylic process thereon.

7. The heat barrier glass of claim 1 used in a heat barrier window wherein said glass substrate is a second glass substrate and further comprising a first glass substrate having first and second major surfaces comprising opposed sides of said substrate, and wherein said first and second substrates are positioned apart from each other in a spaced relationship, and wherein said first substrate is positioned adjacent to a heat emanating plenum; and
said first major surface of said first substrate faces toward said plenum;
said second major surface of said first substrate faces away from said plenum;
said second major surface of said second substrate faces toward said second major surface of said first substrate; and
said first major surface of said second substrate faces away from said second major surface of said second substrate; and
said first major surface of said first substrate has a heat barrier coating applied by a pyrolytic process thereon, and said second major surface of said first substrate has a heat barrier coating applied by a physical vapor deposition process thereon.

8. The heat barrier glass of claim 1 used in a heat barrier window wherein said glass substrate is a second glass substrate and further comprising a first glass substrate having first and second major surfaces comprising opposed sides of said substrate, and wherein said first and second substrates are positioned apart from each other in a spaced relationship, and wherein said first substrate is positioned adjacent to a heat emanating plenum; and
said first major surface of said first substrate faces toward said plenum;
said second major surface of said first substrate faces away from said plenum;
one of said first or second major surfaces of said second substrate faces toward said second major surface of said first substrate; and
the other of said first or second major surfaces of said second substrate faces away from said second major surface of said second substrate.

9. The heat barrier window of any one of claims 5, 6, 7, or 8 wherein said heat barrier coatings applied by a pyrolytic process comprise doped tin oxide.

10. The heat barrier window of any one of claims 5, 6, 7 or 8 wherein said heat barrier coating applied by a physical vapor deposition process comprises silver or ITO.

11. The heat barrier window of any one of claims 5, 6, 7 or 8 wherein said heat barrier coatings are color suppressed.

12. The heat barrier window of any one of claims 5, 6, 7 or 8 wherein at least one of said glass substrates is tempered or heat strengthened.

13. The heat barrier window of any one of claims 5, 6, 7 or 8 wherein said heat barrier coatings are color neutral.

14. The heat barrier window of any one of claims 5, 6, 7 or 8 wherein the C*_{ab} of said glass substrates is less than about 10 across said major surfaces of said substrates.
